# EUROPÄISCHE PATENTSCHRIFT

(11) **EP 2 112 707 B1**
(45) Veröffentlichungstag und Bekanntmachung des Hinweises auf die Patenterteilung: **05.12.2012**
(21) Anmeldenummer: 09004434.8
(22) Anmeldetag: 27.03.2009
(51) Int. Cl.: H01M 8/04, H01M 8/06, H01M 16/00, H01M 8/00

(54) **Verfahren zur Energieversorgung eines Unterseebootes**
Method for supplying energy to a submarine
Procédé d'alimentation en énergie pour un sous-marin

(30) Priorität: 24.04.2008 DE 102008020418
(43) Veröffentlichungstag der Anmeldung: 28.10.2009
(73) Patentinhaber: Howaldtswerke-Deutsche Werft GmbH, 24143 Kiel (DE)
(72) Erfinder: Mechsner, Alfred, Dipl.-Ing., 24148 Kiel (DE); Dannenberg, Norbert, Dipl.-Ing, 23628 Krummesse (DE)
(74) Vertreter: Vollmann, Heiko

(56) Entgegenhaltungen:
- WO-A-01/08247
- WO-A-98/56058
- WO-A1-2009/015331
- US-A- 5 401 589
- US-A1- 2007 264 546

## Beschreibung

Die Erfindung betrifft ein Verfahren zur Energieversorgung eines Unterseebootes, bei dem ein Stromnetz mittels einer Brennstoffzelle mit Energie versorgt wird.

Bei Unterseebooten, wie auch in zahlreichen weiteren Anwendungen, zählt es mittlerweile zum Stand der Technik, ein Stromnetz, etwa ein Bordnetz, über eine Brennstoffzellenanlage mit elektrischer Energie zu versorgen. In einer solchen Brennstoffzellenanlage wird z. B. Wasserstoff mit Sauerstoff katalytisch zu Wasser verbrannt, wobei die entstehende Verbrennungsenergie in elektrische Energie umgesetzt wird. Zum Betrieb einer Brennstoffzellenanlage ist es daher erforderlich, der Brennstoffzelle Kraftstoff, z. B. Wasserstoff, zuzuführen. Die zur Speicherung des Wasserstoffs notwendigen Metallhydridspeicher sind schwer und teuer. Ferner ist das Be- und Entladen der Speicher zeit- und kostenaufwendig.

Es zählt zum Stand der Technik, die Brennstoffzelle bzw. eine oder mehrere Batterien von Brennstoffzellen mittels eines Reformers mit Brennstoff zu versorgen. Reformer allerdings können auf Lastschwankungen und - sprünge im zu versorgenden Stromnetz nur mit Verzögerungen von mehreren Sekunden bei der Produktion des Brennstoffs reagieren. Da aber für einen stabilen Betrieb eine Über- oder Unterversorgung der Brennstoffzelle vermieden werden muss, sind typischerweise große Volumina zur Zwischenspeicherung in der Brennstoffversorgung der Brennstoffzelle vorzusehen. Der Einsatz eines solchen Zwischenspeichers ist beispielsweise aus US-A-5,401.589 bekannt. In zahlreichen Anwendungen jedoch, beispielsweise zur Energieversorgung eines Bordstromnetzes in einem Unterseeboot, ist das Volumen, welches einer Energieversorgungseinrichtung zur Verfügung gestellt werden kann, sehr begrenzt. Darüber hinaus erfährt der Reformer bei der Zwischenspeicherung des Brennstoffs große Lastsprünge. Dies beeinträchtigt die interne Regelbarkeit des Reformers und erschwert einen stabilen und zuverlässigen Betrieb. Insbesondere bei der Verwendung von Wasserstoff als Brennstoff stellen große Zwischenspeicher zudem ein Sicherheitsrisiko dar.

Vor diesem Hintergrund ist es daher Aufgabe der Erfindung, ein verbessertes Verfahren zur Energieversorgung eines Stromnetzes eines Unterseebootes mittels einer Brennstoffzelle zu schaffen, welches auch bei Schwankungen und/oder Sprüngen der vom Stromnetz geforderten Leistung mit geringem Gewichts- und Platzbedarf eingesetzt werden kann.

Diese Aufgabe wird erfindungsgemäß durch ein Verfahren mit den in Anspruch 1 angegebenen Merkmalen gelöst. Vorteilhafte Ausgestaltungen sind in den Unteransprüchen, der nachfolgenden Beschreibung und den Zeichnungen angegeben.

Bei dem erfindungsgemäßen Verfahren wird mindestens eine Brennstoffzelle zur Energieversorgung eingesetzt. Dabei sind unter dem Begriff Brennstoffzelle im Sinne der Erfindung auch eine Vielzahl von Brennstoffzellen bzw. Gruppen von Brennstoffzellen zu verstehen. Anstelle oder in Ergänzung zu einer Versorgung der Brennstoffzelle mit Brennstoff, z. B. Wasserstoff, aus Metallhydridspeichern wird die zumindest eine Brennstoffzelle von mindestens einem Reformer mit Brennstoff gespeist. Der Reformer wird dabei mit flüssigem Kraftstoff, in der Regel mit einem Kohlenwasserstoff, wie etwa Diesel, Methanol oder Ethanol, betrieben. Somit kann auf die Speicherung gasförmigen Wasserstoffs in schweren Metallhydridspeichern und auf deren zeit- und arbeitsaufwendiges Be- und Entladen verzichtet werden. Vielmehr muss lediglich flüssiger Kraftstoff gespeichert und dem Reformer zugeführt werden. Die erheblich erleichterte Speicherung und Handhabung des Kraftstoffs, sowie die Möglichkeit, das Verfahren mit Vorrichtungen geringen Baugewichts umzusetzen, bieten daher wesentliche Vorteile. Mittels dieses Reformers lässt sich nun aus dem Kraftstoff Brennstoff, z. B. gasförmiger Wasserstoff, gewinnen, der der Brennstoffzelle zur Verfügung gestellt wird, indem der Reformer mit der Brennstoffzelle über eine Fluidleitung verbunden wird. Dabei wird das Stromnetz vorteilhaft im Wesentlichen von der Brennstoffzelle versorgt.

Um dies zu gewährleisten ist erfindungsgemäß vorgesehen, dass mindestens ein elektrischer Speicher Leistung aus der Brennstoffzelle aufnimmt, wenn die Leistung der Brennstoffzelle die Netzlast übersteigt, und Leistung abgibt, wenn die Leistung der Brennstoffzelle die Netzlast unterschreitet. Der elektrische Speicher kompensiert folglich sprunghafte Änderungen der Netzlast. So wird der elektrische Speicher bei einer die Netzlast übersteigenden Brennstoffzellenleistung geladen und entsprechend bei die Netzlast unterschreitender Brennstoffzellenleistung entladen. Damit kann mittels des elektrischen Speichers eine sehr schnelle Kompensation von Änderungen der vom Netz geforderten Leistung erfolgen, sodass eine leistungsangepasste Versorgung des Stromnetzes auch bei einer um mehrere Sekunden verzögerten Anpassung der Brennstoffproduktion des Reformers gewährleistet werden kann.

Neben der Kompensation schneller Änderungen der Netzlast wird die Brennstoffproduktion des Reformers erfindungsgemäß durch eine Regelung an die Netzlast angepasst. Dazu wird die Leistungsaufnahme bzw. Leistungsabgabe aus dem bzw. in den Speicher ermittelt und abhängig von dieser Leistungsbilanz die Zufuhr von Kraftstoff zum Reformer gesteuert. Die Zufuhr von Kraftstoff zum Reformer wird dabei in Abhängigkeit von der Aufnahme bzw. Abgabe der Leistung aus dem bzw. in den Speicher gesteuert. Auf diese Weise wird die Brennstoffproduktion des Reformers innerhalb seiner bauartbedingten Verzögerung der Netzlast geeignet angepasst, sodass eine Zwischenspeicherung eines großen Volumens gasförmigen Wasserstoffs nicht erforderlich ist.

Daher kann mit dem erfindungsgemäßen Verfahren eine Energieversorgung von Stromnetzen mit einer durch einen Reformer versorgten Brennstoffzelle bereitgestellt werden, selbst wenn die vom Netz geforderte Leistung schnellen Schwankungen oder Sprüngen unterliegt. Der Reformer ermöglicht dabei die unaufwendige Speicherung des Kraftstoffs und den Einsatz dieses Verfahrens mittels Vorrichtungen geringen Bauraums und -gewichts.

Erfindungsgemäß wird in dem Verfahren die Brennstoffzelle eingangsseitig mit konstantem Druck beaufschlagt. Auf diese Weise wird gewährleistet, dass die Brennstoffzelle den Brennstoff zur Energieerzeugung mit derselben Rate aufnimmt, mit welcher der Reformer den Brennstoff abgibt. Je Zeiteinheit gelangt also die gesamte vom Reformer erzeugte Brennstoffmenge unmittelbar in die Brennstoffzelle. Damit folgt die Brennstoffaufnahme der Brennstoffzelle direkt der Brennstoffproduktion des Reformers. Entsprechend wird eine ausgeglichene Bilanz des aktuell vom Reformer erzeugten und durch die Brennstoffzelle angenommenen Brennstoffs ermöglicht. Diese ausgeglichene Bilanz erlaubt einen stabilen Betrieb der Brennstoffzelle. Würde etwa bei hoher Brennstoffzellenleistung der eingangsseitige Druck auf die Brennstoffzelle abnehmen, so könnte sich, beispielsweise bei der Verbrennung von Wasserstoff, Produktwasser in den Kanälen der Brennstoffzellen sammeln, welches bei konstanter eingangsseitiger Druckbeaufschlagung mit dem Sauerstoffstrom aus der Zelle getrieben würde. Eine konstante Druckbeaufschlagung der Brennstoffzelle verhindert eine solche Beeinträchtigung des Brennstoffzellenbetriebes. Die von der Brennstoffzelle in das Stromnetz eingespeiste elektrische Leistung wird folglich durch den Stoffumsatz des Reformers bestimmt.

Erfindungsgemäß wird in dem erfindungsgemäßen Verfahren die elektrische Leistungsabgabe der Brennstoffzelle als Stellgröße zur Regelung der eingangsseitigen Druckbeaufschlagung der Brennstoffzelle verwendet. Wird die elektrische Leistungsabgabe der Brennstoffzelle durch eine erhöhte elektrische Belastung gesteigert, so nimmt die Brennstoffzelle die Brennstoffe mit einer erhöhten Rate auf. Entsprechend resultiert eine verringerte elektrische Belastung der Brennstoffzelle in einer geringeren Aufnahme des Brennstoffs. Da sich die eingangsseitige Druckbeaufschlagung der Brennstoffzelle aus der Bilanz von aktuell durch den Reformer erzeugtem und durch die Brennstoffzelle abgenommenem Brennstoff ergibt, kann die eingangsseitige Druckbeaufschlagung der Brennstoffzelle durch eine Anpassung der Brennstoffaufnahme durch die Brennstoffzelle an die Brennstoffproduktion des Reformers erfolgen. Indem zu dieser Anpassung die elektrische Leistungsabgabe der Brennstoffzelle als Stellgröße verwendet wird, lässt sich entsprechend der eingangsseitige Druck der Brennstoffzelle regeln. Diese Regelung erweist sich als sehr zuverlässig, da der Stoffumsatz der Brennstoffzelle deutlich schneller angepasst werden kann, als sich die Brennstoffproduktion eines üblichen Reformers ändert. Abweichungen vom Solldruck lassen sich folglich sehr schnell kompensieren. Insbesondere kann die eingangsseitige Druckbeaufschlagung der Brennstoffzelle auf einen konstanten Druckwert geregelt werden, wodurch ein stabiler Betrieb der Brennstoffzelle, wie oben beschrieben, gewöhrleistet ist. Ein vergleichbares Verfahren zum Management in hybriden Netzen wie sie bei der alternativen Stromerzeugung an Land Verwendung finden, zählt grundsätzlich aus der nachveröffentlichten WO 2009/015331 A1 zum Stand der Technik.

Bevorzugt wird die Überleitung des Brennstoffs an die Brennstoffzelle mit einem Speichervolumen als Zwischenspeicher versehen. Dies ermöglicht einen sicheren Betrieb der Brennstoffzelle auch bei schwankendem Stoffumsatz des Reformers. Ein üblicher Reformer kann, wie an sich bekannt, beispielsweise während des Startvorgangs, Phasen mit nur unregelmäßiger Produktion aufweisen, bevor sich stabile Betriebsbedingungen einstellen. Über das Speichervolumen kann daher eine nichtkontinuierlicher Brennstoffproduktion des Reformers ausgeglichen werden, sodass eine stabile Brennstoffversorgung der Brennstoffzelle und damit auch eine stabile Energieeinspeisung in das Stromnetz gewährleistet ist. Verglichen mit einem Zwischenspeicher für gasförmige Brennstoffe zum Ausgleich von Änderungen der Netzlast kann das Speichervolumen bei dem erfindungsgemäßen Verfahren deutlich kleiner ausgelegt werden.

In einer vorteilhaften Ausgestaltung des erfindungsgemäßen Verfahrens, die jedoch auch unabhängig davon eingesetzt werden kann, wird die elektrische Leistung der Brennstoffzelle mittels mindestens eines Gleichstromstellers zwischen Brennstoffzelle und Netz gesteuert. Der Gleichstromsteller steuert über die Steuerung der Ausgangsgleichspannung die Leistungsabgabe der Brennstoffzelle. Die Stellfunktion des Gleichstromstellers wird in dem erfindungsgemäßen Verfahren dazu genutzt, die vom Stromnetz geforderte Leistung, welche typischerweise Schwankungen und Sprüngen unterliegt, auf die Brennstoffzelle und den elektrischen Speicher geeignet aufzuteilen. Wird der Gleichstromsteller zwischen Brennstoffzelle und Stromnetz geschaltet, so erfolgt die Belastung der Brennstoffzelle über den Gleichstromsteller. Damit kann über eine entsprechende Einstellung des Gleichstromstellers die Abgabe der elektrischen Leistung durch die Brennstoffzelle gesteuert werden. Entsprechend bestimmt die Stellung des Gleichstromstellers denjenigen Anteil der elektrischen Leistung, die von der Brennstoffzelle ins Stromnetz gespeist wird. Die Differenz der vom Stromnetz geforderten elektrischen Leistung und der von der Brennstoffzelle gelieferten elektrischen Leistung wird aus dem elektrischen Speicher, im Falle der Energieversorgung eines Unterseebootes vorzugsweise der Hauptbatterie des Unterseebootes, ergänzt. Vorteilhafterweise wird der Gleichstromsteller derart betrieben, dass sich die Leistungsabgabe der Brennstoffzelle aus dem Reformerumsatz bestimmt und sich diese nicht schneller ändert, als der Stoffumsatz des Reformers bei stabilem Betrieb geändert werden kann. Schwankungen und Sprünge der geforderten Netzleistung hingegen können erheblich schneller vom elektrischen Speicher kompensiert werden. Vorteilhaft ist es bei einer derartigen Verschaltung nicht notwendig, das Spannungsniveau der Brennstoffzelle identisch mit dem Spannungsniveau des Stromnetzes auszulegen, da eine Anpassung der Spannungslagen über den Gleichstromsteller erfolgt.

Alternativ kann der Gleichstromsteller zur Steuerung der elektrischen Leistung der Brennstoffzelle zwischen elektrischem Speicher und Stromnetz angeschlossen werden. Im Falle der Energieversorgung eines Unterseebootes handelt es sich bei dem elektrischen Speicher vorzugsweise um eine zur Hauptbatterie zusätzliche Batterie. Auch in dieser Konfiguration nimmt der elektrische Speicher überschüssig von der Brennstoffzelle bereitgestellte Leistung ab und speist bei unterschüssiger Brennstoffzellenleistung das Netz. Damit wird die Belastung der Brennstoffzelle indirekt über den Gleichstromsteller gesteuert, da eine Belastung des elektrischen Speichers eine Entlastung der Brennstoffzelle bedingt, bzw. eine Entlastung des elektrischen Speichers eine Belastung der Brennstoffzelle. In dieser Schaltung wird das Stromnetz vorteilhaft direkt durch die Brennstoffzelle gespeist. Damit muss die von der Brennstoffzelle befriedigte Grundlast nicht über einen Gleichstromsteller verteilt werden, sodass sich die Brennstoffzellenleistung nicht durch den Wirkungsgrad des Gleichstromstellers verringert. Lediglich der dynamische Anteil der bereitgestellten Leistung unterliegt dann der Verteilung durch den Gleichstromsteller und entsprechend wirkungsgradbedingten Leistungsverlusten.

Ferner kann mit den beiden zuvor beschriebenen Anordnungen des Gleichstromstellers die elektrische Leistung der Brennstoffzelle auch dann gesteuert werden, wenn der Brennstoffzelle Brennstoff, z. B. Wasserstoff von einer anderen Quelle als dem Reformer zur Verfügung gestellt wird.

Es ist weiterhin vorteilhaft, wenn über die Steuerung der Zufuhr von Kraftstoff zum Reformer die Differenz von Leistung der Brennstoffzelle und Netzlast auf Null oder einen vorbestimmten Wert geregelt wird. Weicht die Leistung der Brennstoffzelle von der vom Netz geforderten Leistung ab, so wird die Kraftstoffzufuhr zum Reformer entsprechend geändert. Durch den geänderten Stoffdurchsatz des Reformers ändert sich in der Folge die Aufnahme des Brennstoffs durch die Brennstoffzelle, und somit auch die elektrische Leistung der Brennstoffzelle. Wird die Differenz von Leistung der Brennstoffzelle und Netzlast auf Null geregelt, so ist die elektrische Leistung der Brennstoffzelle an die vom Netz geforderte Leistung ideal angepasst. In dieser Situation muss der elektrische Speicher lediglich kurzfristige Schwankungen und/oder Sprünge der vom Stromnetz geforderten Leistung kompensieren. Im zeitlichen Mittel behält der elektrische Speicher seinen Ladezustand folglich bei.

Insbesondere in der Konfiguration mit zwischen elektrischen Speicher und Stromnetz angeschlossenem Gleichstromsteller und direkt mit dem Stromnetz verschalteter Brennstoffzelle kann es jedoch auch erforderlich oder zweckmäßig sein, den Ladezustand des elektrischen Speichers zu ändern: Beispielsweise kann es wünschenswert sein, den elektrischen Speicher gerade auf die Hälfte seiner maximalen Kapazität zu laden, um sowohl für die Leistungsabgabe als auch die Leistungsaufnahme bei der Kompensation der Brennstoffzellenleistung einen gleichermaßen hohen Spielraum zu haben. Auch kann es erstrebenswert sein, einen bestimmten Ladezustand des elektrischen Speichers zur Maximierung seiner Lebensdauer dauerhaft zu halten. Ferner kann es erforderlich sein, beispielsweise bei einem Ausfall des Gleichstromstellers, die Brennstoffzelle so lange mit Nennlast zu betreiben, bis der elektrische Speicher vollständig aufgeladen ist, um die Leistung nachfolgend allein aus dem Speicher ins Stromnetz zu speisen. Um einen solchen erwünschten Ladezustand zu erreichen, muss der elektrische Speicher entsprechend auf- oder entladen werden.

Das Laden bzw. Entladen des elektrischen Speichers kann dadurch erzielt werden, dass über die Steuerung der Zufuhr von Kraftstoff zum Reformer die Differenz von Leistung der Brennstoffzelle und Netzlast auf einen vorbestimmten und von Null abweichenden Wert geregelt wird. Die über- oder unterschüssige Leistung der Brennstoffzelle führt dann zu einer Auf- oder Entladung des elektrischen Speichers. Darüber hinaus kann der vorbestimmte Wert, auf welchen die Differenz von Brennstoffzellenleistung und der vom Netz geforderten Leistung geregelt wird, auch gezielt zeitlichen Änderungen unterliegen. Beispielsweise kann für eine Zeitdauer diese Differenz derart geregelt werden, dass sich ein bestimmter Ladezustand des elektrischen Speichers einstellt. Wenn dieser Ladezustand erreicht ist, kann die Differenz auf Null geändert oder auf eine zur Erhaltung des Ladezustands geeignete zeitabhängige Differenz eingeregelt werden. Es kann ferner auch zweckmäßig sein, den Ladezustand des elektrischen Speichers zwischen zwei Ladungszuständen zur Verlängerung seiner Lebensdauer zu ändern.

Insbesondere in der Konfiguration mit zwischen elektrischem Speicher und Stromnetz angeschlossenem Gleichstromsteller und direkt mit dem Stromnetz verschalteter Brennstoffzelle kann vorteilhaft als elektrischer Speicher mindestens eine wieder aufladbare Batterie verwendet werden. Alternativ kann als elektrischer Speicher mindestens ein Superkondensator verwendet werden. Letzterer hat dabei den Vorteil, besonders schnell ent- und aufgeladen werden zu können und eine sehr große zyklische Lebensdauer aufweist. Zusammen mit einem schnell steuerbaren Gleichstromsteller können damit sprunghafte Änderungen der Netzlast zeitnah kompensiert werden, sodass die Brennstoffzelle keinen sprunghaften Belastungsänderungen unterliegt. Damit lässt sich ein stabiler Betrieb der Brennstoffzelle gewährleisten.

Bevorzugt wird in dem Verfahren die Differenz von elektrischer Leistung der Brennstoffzelle und Netzlast durch Messung des Lade- bzw. Entladestroms des elektrischen Speichers ermittelt. Der Lade- bzw. Entladestrom des elektrischen Speichers stellt dabei einen sehr einfach zu ermittelnden Parameter für die Differenz von elektrischer Leistung der Brennstoffzelle und Netzlast dar, da gerade diese Differenz durch die Aufladung bzw. Entladung des elektrischen Speichers kompensiert wird. In einer einfachen Ausführungsform des erfindungsgemäßen Verfahrens kann es bereits genügen, lediglich die Richtung des Stromflusses in den bzw. aus dem elektrischen Speicher als Regelgröße zu bestimmen. Alternativ kann die Differenz von elektrischer Leistung der Brennstoffzelle und Netzlast durch die Messung zumindest eines Betriebsparameters des Gleichstromstellers ermittelt werden, da der Gleichstromsteller diese Leistungsdifferenz gerade dem elektrischen Speicher zuteilt. Je nach Auslage kann beispielsweise der Ein- oder Ausgangstrom des Gleichstromstellers gemessen werden.

Bevorzugt wird in dem Verfahren die Zufuhr des Kraftstoffs zum Reformer unterhalb der maximal möglichen Last der Brennstoffzelle nach oben begrenzt. Dadurch kann verhindert werden, dass der die Brennstoffzelle beaufschlagende Druck unkontrolliert steigt, wenn die Brennstoffzelle zum einen bei voller Last arbeitet und gleichzeitig die Netzlast größer ist als die Leistungskapazität der Brennstoffzelle. Mit der Zufuhrbegrenzung kann der Reformer daher nicht mehr Wasserstoff erzeugen als von der Brennstoffzelle verbraucht wird. Die Begrenzung der Zufuhr des Kraftstoffs zum Reformer kann beispielsweise derart erfolgen, dass der Druck in einer Leitung, die den Brennstoff vom Reformer zur Brennstoffzelle transportiert, überwacht wird und abhängig von diesem Druck, etwa bei Erreichen eines Schwellwerts, die Kraftstoffzufuhr zum Reformer vermindert wird.

Bevorzugt wird in dem Verfahren die Zufuhr des Brennstoffs vom Reformer zur Brennstoffzelle unterhalb der maximal möglichen Last der Brennstoffzelle nach oben begrenzt. Damit können Lasteinschränkungen für die Reformerlast, wie sie sich etwa durch Ausfall des Teils der Brennstoffzelle oder des Gleichstromstellers ergeben können, durch Lastbegrenzungen erfasst werden.

Eine Vorrichtung zur Ausführung des zuvor beschriebenen Verfahrens zur Energieversorgung eines Stromnetzes eines Unterseebootes mittels einer Brennstoffzelle weist zumindest ein eine ein Stromnetz versorgende Brennstoffzelle auf, einen die Brennstoffzelle speisenden Reformer und einen elektrischen Speicher. Der elektrische Speicher ist derart verschaltet, dass er bei einer die Brennstoffzellenleistung unterschreitenden Netzlast die Brennstoffzelle belastet und bei einer die Brennstoffzellenleistung übersteigenden Netzlast in das Stromnetz speist. Die Vorrichtung weist darüber hinaus eine Regelung auf, welche die Zufuhr des Kraftstoffs zum Reformer in Abhängigkeit von der Ladeleistung des elektrischen Speichers steuert.

Bevorzugt weist die Vorrichtung mindestens einen Gleichstromsteller auf, über welchen die Brennstoffzelle oder der elektrische Speicher mit dem Stromnetz verbunden ist. Mittels des Gleichstromstellers lässt sich die vom Stromnetz geforderte Leistung geeignet auf Brennstoffzelle und elektrischem Speicher aufteilen, wie oben bereits zum erfindungsgemäßen Verfahren ausgeführt.

Die Erfindung ist nachfolgend anhand von in der Zeichnung dargestellten Ausführungsbeispielen näher erläutert. Es zeigen:
- Fig. 1: ein Prinzipschaltbild einer Vorrichtung zur Energieversorgung eines Stromnetzes eines Unterseebootes mittels mindestens einer Brennstoffzelle und
- Fig. 2: ein Prinzipschaltbild einer alternativen Vorrichtung zur Energieversorgung eines Stromnetzes eines Unterseebootes mittels mindestens einer Brennstoffzelle.

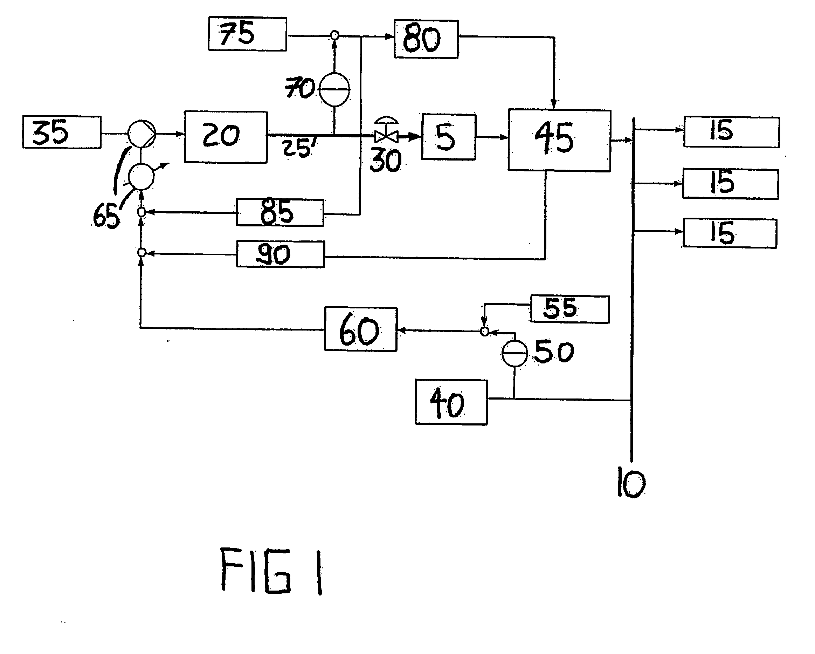

Das anhand von Figur 1 vereinfacht dargestellte Prinzipschaltbild einer Vorrichtung zur Energieversorgung eines Stromnetzes eines Unterseebootes mittels einer Brennstoffzelle zeigt beispielhaft eine Brennstoffzelle 5, die für eine Vielzahl von Brennstoffzellen oder Gruppen von Brennstoffzellen steht und die über ein Bordstromnetz 10 eines Unterseebootes angeschlossene Verbraucher 15 mit elektrischer Energie versorgt. Die Brennstoffzelle 5 ist dabei mit einem Reformer 20 verbunden, der die Brennstoffzelle 5 über eine Leitung 25 mit Wasserstoff beschickt. Der Druck in der Leitung 25 wird über einen Druckminderer 30 reduziert und somit an die Betriebsbedingungen der Brennstoffzelle 5 angepasst. Zur Wasserstofferzeugung wird der Reformer 20 aus einem Kraftstofftank 35 mit Kraftstoff, hier Diesel, versorgt. Es lassen sich jedoch auch andere Kraftstoffe, wie z. B. Ethanol oder Methanol einsetzen.

Die auf diese Weise erzeugte elektrische Leistung wird in das Bordnetz 10 eingespeist, kann dabei jedoch von den aktuellen Leistungsanforderungen der Verbraucher 15 abweichen. Schwankungen und/oder Sprünge in diesen Leistungsanforderungen werden von einer wiederaufladbaren Batterie 40 als elektrischem Speicher kompensiert. Als elektrischer Speicher dient in diesem Ausführungsbeispiel die Hauptbatterie 40 des Unterseebootes. Die Batterie 40 nimmt dazu die von der Brennstoffzelle 5 überschüssig gelieferte Leistung aus dem Bordnetz 10 auf, wenn die Leistung der Brennstoffzelle 5 die Leistungsanforderungen der Verbraucher 15 übersteigt. Dabei wird die Batterie 40 entsprechend aufgeladen. Wenn die Leistung der Brennstoffzelle 5 zur Versorgung der Verbraucher 15 aktuell nicht ausreicht, gibt die Batterie 40 Leistung in das Bordnetz 10 ab. Diese Kompensation der Änderungen der Netzlast wird durch einen Gleichstromsteller 45 gesteuert, über den die Brennstoffzelle 5 an das Bordnetz 10 angeschlossen ist. Damit belastet das Stromnetz 10 mit den angeschlossenen Verbrauchern 15 die Brennstoffzelle 5 folglich nicht direkt, sondern über den Gleichstromsteller 45. Der Gleichstromsteller 45 wird dabei wie weiter unten beschrieben, derart gesteuert, dass der Druck in der Leitung 25 konstant gehalten wird, mithin die Brennstoffzelle 5 gerade mit einer solchen Rate Brennstoff aufnimmt, mit welcher der Reformer 20 Brennstoff erzeugt. Daher wird die Brennstoffzelle 5 durch den Gleichstromsteller gerade so belastet, wie es der Bereitstellung von Brennstoff durch den Reformer 20 entspricht, während schnelle Änderungen der Last durch die Batterie 40 ausgeglichen werden.

Um die Leistung der Energieversorgungseinrichtung an die von den Verbrauchern 15 geforderte Netzleistung anzupassen, wird die Leistung der Brennstoffzelle 5 mit der Netzlast verglichen. Dieser Vergleich erfolgt durch eine Messung des Stromflusses zwischen Bordnetz 10 und Batterie 40 mit einem Strommesser 50. Der gemessene Strom wird mit einem Stromsollwert 55 verglichen und als Regelgröße in eine Regelung 60 für die Kraftstoffzufuhr gegeben. Diese Regelung 60 steuert über eine Pumpe 65 die Kraftstoffversorgung des Reformers 20 aus dem Kraftstofftank 35. So wird abhängig von der Differenz von Brennstoffzellenleistung und Netzlast die Kraftstoffzufuhr zum Reformer 20 und folglich auch die Leistung der Brennstoffzelle 5 eingestellt.

Um einen stabilen Betrieb von Reformer 20 und Brennstoffzelle 5 gewährleisten zu können, ist in die Energieversorgungseinrichtung eine Druckregelung integriert, die den Druck in der Wasserstoff führenden Leitung 25 konstant hält. Dazu wird in der Leitung 25 mit einem Druckmesser 70 der Istdruck ermittelt und mit einem Solldruck 75 verglichen. Die gemessene Druckabweichung bildet die Stellgröße für einen Druckregler 80, der abhängig von dieser Druckabweichung den Gleichstromsteller 45 steuert. Da Brennstoffzelle 5 und Gleichstromsteller 45 nahezu verzögerungsfrei gesteuert werden können, kann der Druck in der Wasserstoff führenden Leitung 25 sehr zuverlässig auf den Solldruck geregelt werden, da Abweichungen vom Solldruck durch eine zeitnahe Gegensteuerung ausgeregelt werden können. Durch diese zuverlässige Regelung des Wasserstoffdrucks kann der Solldruck in der Leitung 25 herabgesetzt werden, sodass sich der Wirkungsgrad des Reformers 20 erhöht. Darüber hinaus ist an der Leitung 25 ein hinreichend großes Speichervolumen angeordnet (in der Darstellung nicht gezeigt), sodass auch bei einem anfänglich oder zwischenzeitlich nur schubweise arbeitenden Reformer 20 eine konstante eingangsseitige Druckbeaufschlagung der Brennstoffzelle 5 möglich ist. Dabei ist dieses Speichervolumen deutlich kleiner ausgelegt, als es bei einem Speichervolumen für gasförmigen Wasserstoff zum Ausgleich von Änderungen der Netzlast möglich wäre.

Neben dem Druckregler 80 enthält die Energieversorgungseinrichtung auch einen Druckbegrenzer 85, der den Druck in der Wasserstoff führenden Leitung 25 nach oben begrenzt. Der Druckbegrenzer 85 verhindert, dass der Reformer 20 mehr Wasserstoff bereitstellt als die Brennstoffzelle 5 verbrauchen kann, falls die Netzlast die maximale Brennstoffzellenleistung übersteigt. Damit wird ein unkontrollierter Anstieg des Drucks in der Leitung 25 vermieden. Dazu reduziert die Druckbegrenzung 85 über die Kraftstoffpumpe 65 die Kraftstoffzufuhr aus dem Kraftstofftank 35 zum Reformer 20, sodass sich der Stoffumsatz des Reformers 20 reduziert. Damit reduziert der Druckbegrenzer 85 den Druck in der Leitung 25, bis dieser wieder den Solldruck 75 erreicht.

Ferner weist die Energieversorgungseinrichtung einen Leistungsbegrenzer 90 auf, welcher die erreichbare Leistung, die durch Brennstoffzelle 5 und Gleichstromsteller 45 bereitgestellt werden kann, misst, und auf Basis dieser Werte die Kraftstoffpumpe 65 ansteuert. Damit kann die Zufuhr von Kraftstoff zum Reformer 20 begrenzt werden, falls sich die maximal erreichbare Leistung der Energieversorgungseinrichtung vermindert. Solche Verminderungen können etwa durch Ausfall von Teilen der Brennstoffzelle 5 oder des Gleichstromstellers 45 bedingt sein. In diesem Falle verhindert der Leistungsbegrenzer 90, dass die Regelungseinheit für die Kraftstoffzufuhr 60 die Kraftstoffzufuhr zur Erhöhung der Leistung der Brennstoffzelle 5 weiter steigert, obwohl wegen des Teilausfalls keine erhöhte elektrische Leistung ins Stromnetz 10 eingespeist werden kann.

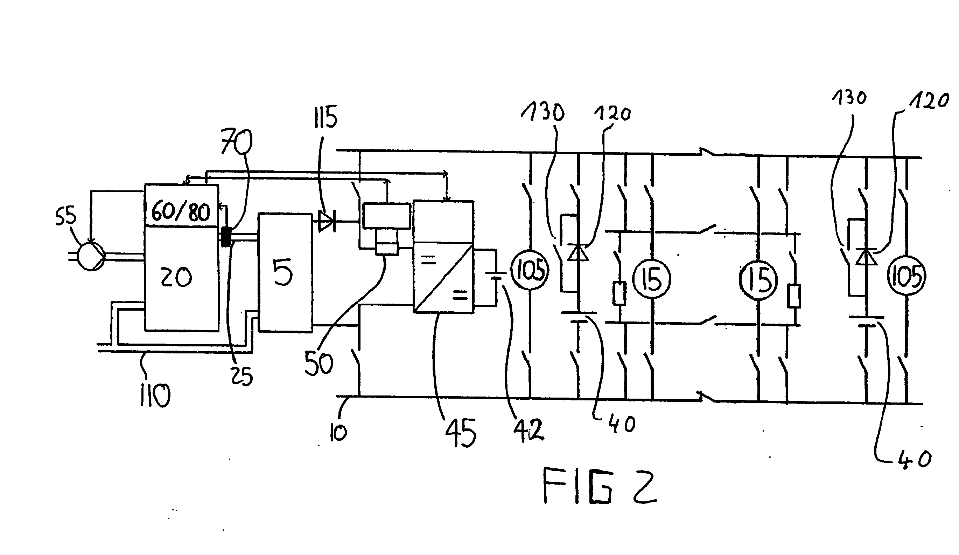

In Figur 2 ist das Prinzipschaltbild einer weiteren Vorrichtung zur Energieversorgung eines Stromnetzes 10 eines Unterseebootes mittels einer Brennstoffzelle 5 dargestellt. Das Stromnetz 10 ist dabei als ein Bordstromnetz 10 von Hauptbatterien 40 eines Unterseebootes ausgestaltet, an welchen mindestens ein Generator 105 und ein Verbraucher 15 angeschlossen sind. Die Energieversorgung erfolgt durch eine Brennstoffzelle 5, welche von einem Reformer 20 über eine Wasserstoff führende Leitung 25 mit Wasserstoff versorgt wird. Der Reformer 20 wird aus einem Kraftstofftank 35 mit Kraftstoff versorgt. Darüber hinaus weist die Energieversorgungseinrichtung eine Sauerstoffleitung 110 für die Brennstoffzelle 5 und den Reformer 20 auf, über welche der für die jeweiligen chemischen Reaktionen erforderliche Sauerstoff zugeführt wird. Die Brennstoffzelle 5 ist über eine Diode 115 direkt an das Stromnetz 10 angebunden, da in dieser Ausgestaltung Rückströme in die Brennstoffzelle, die zur Schädigung der Brennstoffzelle führen können, vermieden werden. Parallel zur Brennstoffzelle 5 ist ein zusätzlicher elektrischer Speicher in Form einer wiederaufladbaren Batterie 42 an das Bordstromnetz 10 angeschlossen. Dabei ist die Batterie 42 nicht direkt, sondern über einen Gleichstromsteller 45 mit dem Stromnetz 10 verschaltet. Der Gleichstromsteller verteilt die Belastung des Bordstromnetzes 10 durch die Verbraucher 15 derart auf Brennstoffzelle 5 und elektrischen Speicher 42, dass die elektrische Leistung der Brennstoffzelle 5 der Brennstoffproduktion des Reformers 20 folgt, während schnelle Änderungen der Netzlast durch die als Puffer wirkende Batterie 42 ausgeglichen werden.

Die Batterie 42 kompensiert Schwankungen und/oder Sprünge in der Leistungsanforderung durch das Stromnetz 10. Unterschreitet die vom Bordstromnetz 10 geforderte Leistung die von der Brennstoffzelle 5 bereitgestellte Leistung, so gibt die Brennstoffzelle 5 ihre überschüssige Leistung an die Batterie 42 ab, in dem durch die Diode 115 ein entsprechender Ladestrom zum Aufladen der Batterie 42 fließt. Umgekehrt kann sich die Batterie 42 in das Stromnetz 10 entladen, wenn die Leistungsanforderung des Stromnetzes 10 die gelieferte Laufleistung der Brennstoffzelle 5 übersteigt. Der Gleichstromsteller 45 ist in diesem Ausführungsbeispiel für einen bidirektionalen Betrieb ausgebildet, da die Leistungsübertragung in beiden Richtungen über den Gleichstromsteller 45 erfolgen kann. Wenn die Brennstoffzelle 5 mit einer die Netzlast übersteigenden Leistung die Batterie 42 lädt, überträgt der Gleichstromsteller 45 die Leistung in Richtung der Batterie 42. Wenn die Brennstoffzellenleistung hingegen die Netzlast unterschreitet, überträgt der Gleichstromsteller 45 die Leistung der Batterie 42 auch an das Netz. Zur Anpassung des Reformers 20 an die von den Verbrauchern 15 über das Stormnetz 10 geforderte Leistung werden der Leistungsbedarf des Netzes 10 und das Leistungsangebot der Brennstoffzelle 5 miteinander verglichen.

Zu diesem Zweck ist zwischen Stromnetz und der mit dem Gleichstromsteller 45 parallel geschalteten Batterie 42 ein Strommesser 50 angeordnet, der den Stromfluss zwischen Brennstoffzelle 5 und Gleichstromsteller 45 und somit zwischen Brennstoffzelle 5 und Batterie 42 bzw. zwischen Stromnetz 10 und Geichstromsteller 45 und somit zwischen Stromnetz 10 und Batterie 42 misst. Der auf diese Weise erhaltene Vergleichswert wird an eine Regelung für die Kraftstoffzufuhr 60 übermittelt, die eine Kraftstoffpumpe 65 ansteuert, um die Versorgung aus dem Kraftstofftank 35 anzupassen. Dabei folgt die Leistungsabgabe der Brennstoffzelle 5 dem Stoffumsatz des Reformers 20. Die Brennstoffzelle 5 und der Reformer 20 werden dazu synchronisiert, in dem der Druck in der Leitung 25 auf einen konstanten Wert eingeregelt wird. Dazu übermittelt der Druckmesser 70 den aktuellen Druckwert an einen Druckregler 80. Dieser steuert den Gleichstromsteller 45, welcher die elektrische Leistung der Brennstoffzelle 5 derart einstellt, dass der Druck in der Leitung 25 auf einen konstanten Sollwert eingeregelt wird. Über die konstante Druckbeaufschlagung der Leitung 25 entspricht die Rate der Brennstoffaufnahme durch die Brennstoffzelle 5 der Rate der Brennstoffproduktion durch den Reformer 20. Damit kann über die Kraftstoffpumpe 65 die elektrische Leistung der Brennstoffzelle 5 eingeregelt werden. Überschreitet die Netzlast den Bereich der Nennleistung der Brennstoffzelle, so wird abhängig von der Spannung der Hauptbatterie 40 die zusätzlich notwendige Leistung über eine Hauptbatteriediode 120 ergänzt.

Auch in diesem Beispiel kompensiert also ein elektrischer Speicher 42 kurzfristige Fluktuationen und/oder Änderungen der Netzlast, während längerfristigere Änderungen der Grundlast durch Anpassung der Reformerproduktion und damit der Brennstoffzellenleistung ausgeglichen werden. Ein Vorteil dieser Ausführungsform besteht darin, dass die Grundlast des Bordstromnetzes 10 direkt durch die Brennstoffzelle 5 bereitgestellt werden kann. Damit muss die Grundlast nicht über den Gleichstromsteller 45 verteilt werden. Entsprechend kann vermieden werden, dass die elektrische Leistung der Brennstoffzelle 5 über den Wirkungsgrad des Gleichstromstellers 45 vor Einspeisung in das Bordstromnetz 10 reduziert wird.

Diese Ausgestaltung lässt sich zudem in einem Notfallmodus weiter betreiben, wenn der Gleichstromsteller 45 ausfällt. Dazu ist es lediglich erforderlich, dass zumindest eine Hauptbatterie 40 nutzbar ist. In einem solchen Notfall werden Reformer 20 und Brennstoffzelle 5 so lange mit Nennlast betrieben, bis die Hauptbatterie 40 vollständig aufgeladen ist. Die Hauptbatteriediode 120 muss dazu vom Schalter 130 überbrückt werden. Dann kann der Reformer 20 in einem Bereitschaftszustand gehalten werden und die Brennstoffzelle 5 vom Netz 10 getrennt werden. Damit wird das gesamt Bordstromnetz 10 von der Hauptbatterie 100 versorgt. Bei Erreichen eines vorgegebenen Entladezustandes der Hauptbatterie 40 wird der Reformer 20 wieder auf Nennlast gefahren und die Brennstoffzelle 5 erneut zugeschaltet.

### Bezugszeichenliste

- 5 -: Brennstoffzelle
- 10 -: Bordstromnetz eines Unterseebootes als Stromnetz
- 15 -: Verbraucher
- 20 -: Reformer
- 25 -: Leitung
- 30 -: Druckminderer
- 35 -: Kraftstofftank
- 40 -: Hauptbatterie
- 42 -: Batterie als zusätzlicher elektrischer Speicher
- 45 -: Gleichstromsteller
- 50 -: Strommesser
- 55 -: Stromreferenz
- 60 -: Regelung für die Kraftstoffzufuhr
- 65 -: Kraftstoffpumpe mit steuerbarem Motor
- 70 -: Druckmesser
- 75 -: Druckreferenz
- 80 -: Druckregler
- 85 -: Druckbegrenzer
- 90 -: Leistungsbegrenzer
- 105 -: Generator
- 110 -: Sauerstoffleitung
- 115 -: Diode
- 120 -: Hauptbatteriediode
- 130 -: Schalter

## Patentansprüche

1. Verfahren zur Energieversorgung eines Unterseebootes, bei dem ein Stromnetz (10) mittels mindestens einer Brennstoffzelle (5) mit Energie versorgt wird, bei welchem die mindestens eine Brennstoffzelle (5) von mindestens einem Reformer (20) gespeist wird, bei welchem mindestens ein elektrischer Speicher (40;42) Leistung aus der zumindest einen Brennstoffzelle (5) aufnimmt, wenn die Leistung der Brennstoffzelle (5) die Netzlast übersteigt, und Leistung abgibt, wenn die Leistung der Brennstoffzelle (5) die Netzlast unterschreitet, und bei welchem die Zufuhr des Kraftstoffs zum Reformer (20) in Abhängigkeit der Abgabe und Aufnahme der Leistung aus dem bzw. in den Speicher (40;42) gesteuert wird, **dadurch gekennzeichnet, dass** die Brennstoffzelle (5) eingangsseitig mit konstantem Druck beaufschlagt wird und das zur Regelung der eingangsseitigen Druckbeaufschlagung der Brennstoffzelle (5) ihre elektrische Leistungsabgabe als Stellgröße verwendet wird.

2. Verfahren nach Anspruch 1, **dadurch gekennzeichnet, dass** die elektrische Leistung der Brennstoffzelle (5) mittels mindestens eines Gleichstromstellers (45) zwischen Brennstoffzelle (5) und Netz (10) gesteuert wird.

3. Verfahren nach Anspruch 1, **dadurch gekennzeichnet, dass** die elektrische Leistung der Brennstoffzelle (5) mittels mindestens eines Gleichstromstellers (45) zwischen elektrischem Speicher (40; 42) und Netz (10) bestimmt wird.

4. Verfahren nach einem der vorhergehenden Ansprüche, **dadurch gekennzeichnet, dass** über die Steuerung der Zufuhr des Kraftstoffs zum Reformer (20) die Differenz von Leistung der Brennstoffzelle (5) und Netzlast auf Null oder einen vorbestimmten Wert geregelt wird.

5. Verfahren nach einem der vorhergehenden Ansprüche, **dadurch gekennzeichnet, dass** als elektrischer Speicher (40; 42) mindestens eine wiederaufladbare elektrische Batterie verwendet wird.

6. Verfahren nach einem der vorhergehenden Ansprüche, **dadurch gekennzeichnet, dass** als elektrischer Speicher (40; 42) mindestens ein Superkondensator verwendet wird.

7. Verfahren nach einem der vorhergehenden Ansprüche, **dadurch gekennzeichnet, dass** die Differenz von elektrischer Leistung der Brennstoffzelle (5) und Netzlast durch Messung des Lade- bzw. Entladestroms des elektrischen Speichers (40; 42) ermittelt werden.

8. Verfahren nach einem der vorhergehenden Ansprüche, **dadurch gekennzeichnet, dass** die Differenz von elektrischer Leistung der Brennstoffzelle (5) und Netzlast durch Messung zumindest eines Betriebsparameters des Gleichstromstellers (45) ermittelt wird.

9. Verfahren nach einem der vorhergehenden Ansprüche, **dadurch gekennzeichnet, dass** die elektrische Leistung der Brennstoffzelle (5) unterhalb der maximal möglichen Last nach oben begrenzt wird.

10. Verfahren nach einem der vorhergehenden Ansprüche, **dadurch gekennzeichnet, dass** die Zufuhr des Brennstoffs vom Reformer (20) zur Brennstoffzelle (5) unterhalb der maximal möglichen Last der Brennstoffzelle (5) nach oben begrenzt wird.

## Claims

1. A method for the energy supply of a submarine, with which an electricity mains (10) is supplied with energy by way of at least one fuel cell (5), with which the at least one fuel cell (5) is fed by at least one reformer (20), with which at least one electrical storage means (40; 42) takes up power from the at least one fuel cell (5) when the power of the fuel cell (5) exceeds the mains load, and delivers power when the power of the fuel cell (5) falls short of the mains load, and with which the supply of fuel to the reformer (20) is controlled in dependence on the delivery and uptake of the power from and into the storage means (40; 42) respectively, **characterised in that** the fuel cell (5) on the entry side is impinged with a constant pressure and that for the closed-loop control of the entry-side pressure impingement of the fuel cell (5), its electrical power delivery is used as a correcting variable.

2. A method according to claim 1, **characterised in that** the electrical power of the fuel cell (5) is controlled by way of at least one d.c. chopper converter (45) between the fuel cell (5) and the mains (10).

3. A method according to claim 1, **characterised in that** the electrical power of the fuel cell (5) is determined by way of at least one d.c. chopper converter (45) between the electrical storage means (40; 42) and the mains (10).

4. A method according to one of the preceding claims, **characterised in that** the difference of the power of the fuel cell (5) and the mains load is controlled with a closed loop to zero or to a predefined value, via the control of the supply of the fuel to the reformer (20).

5. A method according to one of the preceding claims, **characterised in that** at least one rechargeable electrical battery is used as an electrical storage means (40; 42).

6. A method according to one of the preceding claims, **characterised in that** at least one supercapacitor is used as an electrical storage means (40; 42).

7. A method according to one of the preceding claims, **characterised in that** the difference of the electrical power of the fuel cell (5) and the mains load is evaluated by way of the measurement of the charging respectively discharging current of the electrical storage means (40; 42).

8. A method according to one of the preceding claims, **characterised in that** the difference of the electrical power of the fuel cell (5) and the mains load is determined by the measurement of at least one operating parameter of the d.c. chopper converter (45).

9. A method according to one of the preceding claims, **characterised in that** the electrical power of the fuel cell (5) is limited to the top below the maximal possible load.

10. A method according to one of the preceding claims, **characterised in that** the supply of the fuel from the reformer (20) to the fuel cell (5) is limited to the top below the maximal possible load of the fuel cell (5).

## Revendications

1. Procédé pour l'alimentation en énergie d'un sous-marin, dans lequel un réseau électrique (10) est alimenté en énergie au moyen d'au moins une pile à combustible (5), dans lequel la pile à combustible (5), au moins au nombre de une, est alimentée par au moins un reformeur (20), dans lequel au moins un accumulateur électrique (40 ; 42) reçoit de la puissance de la pile à combustible (5), au moins au nombre de une, lorsque la puissance de la pile à combustible (5) excède la charge du réseau, et fournit de la puissance lorsque la puissance de la pile à combustible (5) devient inférieure à la charge du réseau, et dans lequel l'acheminement du carburant au reformeur (20) est commandé en fonction de la fourniture ou de la réception de puissance par l'accumulateur (40 ; 42), **caractérisé en ce que** la pile à combustible (5) reçoit sur le côté entrée une pression constante et **en ce que**, pour la régulation de l'application de la pression à la pile à combustible (5) sur le côté entrée, on utilise comme variable réglante la fourniture de puissance électrique de cette pile.

2. Procédé selon la revendication 1, **caractérisé en ce que** la puissance électrique de la pile à combustible (5) est commandée au moyen d'au moins un régulateur de courant continu (45) intercalé entre la pile à combustible (5) et le réseau (10).

3. Procédé selon la revendication 1, **caractérisé en ce que** la puissance électrique de la pile à combustible (5) est déterminée au moyen d'au moins un régulateur de courant continu (45) intercalé entre l'accumulateur électrique (40 ; 42) et le réseau (10).

4. Procédé selon l'une des revendications précédentes, **caractérisé en ce que** la différence de puissance entre la pile à combustible (5) et la charge du réseau est réglée sur zéro ou sur une valeur prédéterminée par la commande de l'acheminement du carburant au reformeur (20).

5. Procédé selon l'une des revendications précédentes, **caractérisé en ce qu'**on utilise comme accumulateur électrique (40 ; 42) au moins une batterie électrique rechargeable.

6. Procédé selon l'une des revendications précédentes, **caractérisé en ce qu'**on utilise comme accumulateur électrique (40 ; 42) au moins un supercondensateur.

7. Procédé selon l'une des revendications précédentes, **caractérisé en ce que** la différence de puissance électrique entre la pile à combustible (5) et la charge du réseau est déterminée par mesure du courant de charge ou de décharge de l'accumulateur électrique (40; 42).

8. Procédé selon l'une des revendications précédentes, **caractérisé en ce que** la différence de puissance électrique entre la pile à combustible (5) et la charge du réseau est déterminée par mesure d'au moins un paramètre de fonctionnement du régulateur de courant continu (45).

9. Procédé selon l'une des revendications précédentes, **caractérisé en ce que** la puissance électrique de la pile à combustible (5) est limitée vers le haut à une valeur inférieure à la charge maximale possible.

10. Procédé selon l'une des revendications précédentes, **caractérisé en ce que** l'acheminement du carburant du reformeur (20) à la pile à combustible (5) est limitée vers le haut à une valeur inférieure à la charge maximale possible de la pile à combustible (5).
